(19) Europäisches Patentamt / European Patent Office / Office européen des brevets

(11) **EP 4 321 482 A1**

(12) **EUROPEAN PATENT APPLICATION**
published in accordance with Art. 153(4) EPC

(43) Date of publication:
**14.02.2024 Bulletin 2024/07**

(21) Application number: **22784729.0**

(22) Date of filing: **08.04.2022**

(51) International Patent Classification (IPC):
$C01B\ 33/20^{(2006.01)}$    $C01B\ 33/22^{(2006.01)}$
$C01B\ 33/24^{(2006.01)}$    $C10B\ 57/04^{(2006.01)}$
$C10B\ 57/06^{(2006.01)}$    $C04B\ 35/52^{(2006.01)}$
$C04B\ 35/524^{(2006.01)}$    $C04B\ 35/528^{(2006.01)}$
$C01B\ 32/05^{(2017.01)}$    $C01B\ 32/205^{(2017.01)}$

(52) Cooperative Patent Classification (CPC):
C01B 32/05; C01B 32/205; C01B 33/20;
C01B 33/22; C01B 33/24; C04B 35/52;
C04B 35/524; C04B 35/528; C10B 57/04;
C10B 57/06

(86) International application number:
**PCT/JP2022/017351**

(87) International publication number:
**WO 2022/215747 (13.10.2022 Gazette 2022/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.04.2021 JP 2021066201
09.04.2021 JP 2021066203
09.04.2021 JP 2021066639**

(71) Applicant: **Mitsubishi Chemical Corporation
Chiyoda-ku
Tokyo 100-8251 (JP)**

(72) Inventor: **SHIMOOKA Satoshi
Tokyo 100-8251 (JP)**

(74) Representative: **Hoffmann Eitle
Patent- und Rechtsanwälte PartmbB
Arabellastraße 30
81925 München (DE)**

(54) **NEEDLE COKE FOR GRAPHITE ELECTRODE, NEEDLE COKE MANUFACTURING METHOD, AND INHIBITOR**

(57) The object of the present invention is to provide a needle coke for a graphite electrode, which suppresses puffing of the needle coke and improves the production yield and performances of graphite electrodes without incurring a large cost in the production of a needle coke, and also provide a production method and an inhibitor therefor. An inhibitor for graphite electrode production, including at least one of a metal consisting of an element (Mβ) and an oxide comprising the element (Mβ), wherein the element (Mβ) is at least one element selected from the group consisting of group 4 elements, group 8 elements, group 9 elements, group 10 elements, group 13 elements, group 14 elements and group 15 elements of the long-form periodic table, or including at least one of the metal consisting of an element (Mβ) and a compound including the element (Mβ), wherein the inhibitor volatilizes at a temperature of 2100 to 6000 °C.

FIG. 1

**Description**

[Technical Field]

The present invention relates to a needle coke for a graphite electrode, a method for producing the same, and an inhibitor.

Priority is claimed on Japanese Patent Application Nos. 2021-066201, 2021-066203 and 2021-066639, each filed April 9, 2021, the contents of which are incorporated herein by reference.

[Background Art]

Coal tar generated as a by-product during coal carbonization is mostly composed of condensed polycyclic aromatic compounds, and has long been used as a raw material for various carbon products. Regarding the categories of the coal tar products, the products derived from distillate oil components, such as creosote oil and naphthalene, account for about 30 %, and products derived from coal tar pitch, which is a non-distillate, heavy component, account for the remaining 70 %. Of these, a needle coke produced from coal tar pitch takes up an especially important position as a high-value-added product, and is mainly used as an aggregate for graphite electrodes for electric steelmaking. In the process of producing a graphite electrode, first, needle coke particles and a binder pitch are blended in a predetermined ratio, heated and kneaded, and then extruded to produce a raw electrode. The raw electrode is calcined, graphitized, and processed to obtain a graphite electrode product.

Since this graphite electrode is used under severe high temperature conditions, extremely high thermal shock resistance is required. Needle coke with a small coefficient of thermal expansion is required to produce graphite electrodes with high thermal shock resistance. Needle coke made from coal tar pitch (hereinafter also referred to as "pitch-based needle coke") has the smallest coefficient of thermal expansion among all cokes, and is therefore the most preferable raw material for graphite electrodes. However, while the pitch-based needle coke provides a high-quality graphite electrode, it tends to cause an irreversible expansion phenomenon called "puffing" in the graphitization process for manufacturing the electrode. Therefore, the pitch-based needle coke has a defect in that when the pitch-based needle coke is rapidly graphitized, cracks occur in the final product, which significantly decreases the yield.

For this reason, the production of graphite electrodes requires temperature to be raised over a long time for graphitization, resulting in significantly low productivity. The puffing phenomenon described above is considered to be the result of abnormal expansion caused by the rapid desorption and volatilization of nitrogen and sulfur contained in the pitch-based needle coke, which occur primarily in the temperature region of 1500 to 2100 °C and the temperature region of 2500 to 2800 °C region during the graphitization process.

For resolving the issue of such a puffing phenomenon, several measures have been taken in the manufacturing process of graphite electrodes. Examples of known methods include a method in which small amounts of iron oxide, nickel, and titanium oxide as puffing inhibitors are added in the step of mixing a pitch-based needle coke and a binder pitch as an caking additive to form stable compounds of the sulfur content and metals in the coke during graphitization and delay the desorption timing until reaching their decomposition temperatures, thereby suppressing puffing, and a method in which the bulk density of the graphite electrode is adjusted in the molding process to facilitate volatilization of the gas generated during graphitization. However, although the former method has a certain effect in reducing the expansion caused by sulfur, it is not effective in reducing the expansion caused by nitrogen. The latter method has a problem that it leads to a decrease in mechanical strength of the graphite electrode due to a decrease in bulk density.

In addition to the above, various methods have been proposed for suppressing puffing during the production of graphite electrodes using needle coke. For example, Patent Literatures 1 and 2 propose a method that reduces puffing by heat-treating pitch coke at 1500 °C or higher for denitrification. Further, Patent Literature 3 discloses a method that subjects raw coke to pretreatment such as oxidation treatment in advance and then heats the raw coke at a normal calcination temperature. These methods, however, have respective problems. That is, the former method consumes a large amount of energy due to high-temperature heating, and the latter method requires more complicated steps than conventional methods.

Another method is proposed, which adds a solution of a metal compound used as a puffing inhibitor only to the surface of agglomerates and granules of coke before kneaded with a binder pitch or the like, and heats the resulting, thereby increasing the puffing suppression effect despite less amount of the inhibitor added (Patent Literature 4).

[Citation List]

[Patent Literature]

Patent Literature 1: Japanese Unexamined Patent Application, First Publication No. Sho 60-33208
Patent Literature 2: Japanese Unexamined Patent Application, First Publication No. Sho 60-208392
Patent Literature 3: Japanese Unexamined Patent Application, First Publication No. Sho 63-135486
Patent Literature 4: Japanese Unexamined Patent Application, First Publication No. 2001-329271

[Summary of Invention]

[Technical Problem]

However, all of these low-puffing needle coke production methods have problems such as poor cost-efficiency which has prevented the practical implementation of the method, or inability to always provide a sufficient puffing reduction effect.

The present invention has been made in view of the above circumstances, and the object of the present invention is to provide a needle coke for a graphite electrode, which suppresses puffing of the needle coke and improves the production yield and performances of graphite electrodes without incurring a large cost in the production of a needle coke, and also provide a production method and an inhibitor therefor.

[Solution to Problem]

The present inventors have made intensive studies to solve the above problems. As a result, they have found that the puffing suppression effect can be increased by using an inhibitor for graphite electrode production, which includes at least one of a metal consisting of an element ($M\beta$) or an oxide including the element ($M\beta$), which are described below, or using an inhibitor for graphite electrode production, which includes at least one of a metal consisting of an element ($M\beta$) or a compound including the element ($M\beta$), which are described below, and volatilizes at a temperature of 2100 to 6000 °C. Based on this finding, the present invention has been completed.

In the case of the inhibitor including at least one of a metal consisting of the element ($M\beta$) and an oxide including the element ($M\beta$), for further enhancing the puffing suppression effect, the inhibitor is preferably one including an element ($M\alpha$) and an oxide including an element ($M\beta$), which are described below, or one including an element ($M\alpha$-1) and an oxide including an element ($M\beta$), which are described below.

Specifically, the gist of the present invention is as enumerated in the following [1] to [24].

[1] An inhibitor for graphite electrode production, including at least one of a metal consisting of an element ($M\beta$) and an oxide including the element ($M\beta$),
wherein the element ($M\beta$) is at least one element selected from the group consisting of group 4 elements, group 8 elements, group 9 elements, group 10 elements, group 13 elements, group 14 elements and group 15 elements of the long-form periodic table.
[2] The inhibitor according to [1], wherein the element ($M\beta$) is at least one element selected from the group consisting of Si, Ge, Al, B, Ti, Fe and P.
[3] The inhibitor according to [1] or [2], wherein the oxide including the element ($M\beta$) is a composite oxide including an element ($M\alpha$) and the element ($M\beta$),
wherein the element ($M\alpha$) is at least one metal element excluding the element ($M\beta$).
[4] The inhibitor according to [3], wherein the element ($M\alpha$) is at least one metal element selected from the group consisting of K, Sc, alkaline earth metal elements and rare earth metal elements.
[5] The inhibitor according to [3] or [4], wherein the composite oxide has a compositional represented by formula (1):

$$M\alpha_{3-x}M\beta_{1-y}O_{5-z} \qquad (1),$$

wherein $0 \leqq x < 3$, $0 \leqq y < 1$, and $0 \leqq z < 5$.
[6] The inhibitor according to [1] or [2], which further includes at least one of a metal consisting of an element ($M\alpha$) and an oxide including the element ($M\alpha$),
wherein the element ($M\alpha$) is at least one metal element excluding the element ($M\beta$).
[7] The inhibitor according to [6], wherein the element ($M\alpha$) is at least one metal element selected from the group consisting of K, Sc, alkaline earth metal elements and rare earth metal elements.
[8] The inhibitor according to [6] or [7], wherein the oxide including the element ($M\alpha$) has a composition represented by formula (2):

$$M\alpha_{3-xl}O_{3-zl} \qquad (2),$$

wherein M$\alpha$ is the element (M$\alpha$), $0 \leqq x1 < 3$, and $0 \leqq z1 < 3$.

[9] The inhibitor according to any one of [6] to [8], wherein the oxide including the element (M$\beta$) has a composition represented by formula (3):

$$M\beta_{1-y1}O_{2-z2} \qquad (3),$$

wherein M$\beta$ is the element (M$\beta$), $0 \leqq y1 < 1$, and $0 \leqq z2 < 2$.

[10] An inhibitor for graphite electrode production, including at least one of a metal consisting of an element (M$\beta$) and a compound including the element (M$\beta$),

wherein the inhibitor volatilizes at a temperature of 2100 to 6000 °C, and
wherein the element (M$\beta$) is at least one element selected from the group consisting of group 4 elements, group 8 elements, group 9 elements, group 10 elements, group 13 elements, group 14 elements and group 15 elements of the long-form periodic table.

[11] The inhibitor according to [10], which satisfies $Y/X < 0.01$, wherein X is a proportion (% by weight) of the inhibitor added to a needle coke, and Y is a proportion (% by weight) of the inhibitor after heat-treated at 2800 °C for 30 minutes.

[12] The inhibitor according to [10] or [11], wherein the element (M$\beta$) is at least one element selected from the group consisting of Si, Ge, Al, B, Ti, Fe and P.

[13] The inhibitor according to any one of [10] to [12], which reacts with a sulfur compound.

[14] The inhibitor according to any one of [10] to [13], which reacts with a nitrogen compound.

[15] The inhibitor according to any one of [10] to [14], wherein the oxide including the element (M$\beta$) further includes an element (M$\alpha$-1),
wherein the element (M$\alpha$-1) is at least one metal element including at least an alkaline earth metal element, excluding the element (M$\beta$).

[16] The inhibitor according to any one of [10] to [15], which further includes at least one of a metal consisting of an element (M$\alpha$-1) or a compound including the element (M$\alpha$-1),
wherein the element (M$\alpha$-1) is at least one metal element including at least an alkaline earth metal element, excluding the element (M$\beta$).

[17] The inhibitor according to any one of [10] to [16], wherein the element (M$\alpha$-1) is at least one metal element selected from the group consisting of K, Sc, alkaline earth metal elements and rare earth metal elements.

[18] The inhibitor according to any one of [1] to [17], which has a puffing value $P_{2100}$ of 1.00 % or less, which is calculated by formula (I) with respect to a test piece prepared in an evaluation test (i):

$$P_{2100} = (L2 - L1)/L1 \times 100 \qquad (I),$$

wherein:

L1 is a thickness (mm) of the test piece before calcination, and
L2 is a thickness (mm) of the test piece after calcination up to 2100 °C; and wherein the evaluation test (i) comprises:
mixing a coal-based needle coke, a binder pitch in an amount of 30 % by weight in terms of an outer percentage based on an amount of the coal-based needle coke, and the inhibitor, followed by kneading for 5 minutes while heating at 165 °C to obtain a kneaded product, molding the kneaded product into a disk of 20 mm$\Phi \times$ 3 mm to 15 mm, followed by precalcination at 1000 °C for 3 hours using a calcination furnace to burn off the binder pitch to obtain a test piece, and heating the test piece to 2100 °C at a heating rate of 20 °C/min to perform a calcination of the test piece, wherein the L1 and the L2 of the test piece are respectively measured before and after the calcination of the test piece.

[19] A composition including the inhibitor of any one of [1] to [18], and a needle coke.

[20] A needle coke for a graphite electrode, including the composition of [19].

[21] A graphite electrode obtained by calcining the needle coke of [20].

[22] A method for producing a needle coke for a graphite electrode, wherein the needle coke includes a composition in which an inhibitor is directly attached to the surface of the needle coke,
the method including adding a solution or molten form of the inhibitor of any one of [1] to [18] to a needle coke before kneaded with a binder pitch, and attaching the inhibitor directly to the surface of the needle coke.

[23] A method for producing a graphite electrode, including calcining the needle coke of claim 20.

[24] The method according to [23], wherein the needle coke is calcined at a temperature of 300 to 1500 °C.

[Advantageous Effects of Invention]

The present invention can provide a graphite electrode with low puffing while maintaining low thermal expansion by using a specific inhibitor in the graphite electrode production.

[Brief Description of Drawings]

Fig. 1 is a diagram showing the results of plotting the cold puffing values against the added amounts of $Ca_3SiO_5$ for Examples A3, A12 to A14 and Comparative Example A1.
FIG. 2 is a diagram showing the results of measuring nitrogen by TPD-MS while raising the temperature up to 1700 °C in Examples A3, A12 to A14, and Comparative Example A1.
FIG. 3 is a diagram showing the results of standardizing the results of powder X-ray diffraction $2\theta = 24°$ to 27° with respect to the peak tops after the TPD-MS measurement in Examples A3, A12 to A14 and Comparative Example A1.
FIG. 4 is a diagram showing the results of measuring the puffing values from 1000 °C to 2650 °C in Example A21 and Comparative Example A8.
FIG. 5 is a diagram showing cold puffing values with calcination up to 2100 °C and cold puffing values with calcination up to 2800 °C in Examples B1 and B2, and Comparative Examples B1 and B2.

[Description of Embodiments]

Hereinbelow, the present invention is described in detail, but the present invention is not limited to what is described below, and can be implemented as appropriate with various modifications so long as such modifications do not deviate from the substance of the present invention.
In the following description, "% by weight" is synonymous with "% by mass", and "parts by weight" is synonymous with "parts by mass". In the present invention, "pitch-based" and "coal-based" are treated as synonymous terms.
The "sulfur content of coke" in the context of the present invention means a value measured according to JIS M8813. Further, the "nitrogen content of coke" in the context of the present invention means a value measured according to JIS M8819.

1. Inhibitor for graphite electrode production

The inhibitor for graphite electrode production according to the present invention (hereinafter, also simply referred to as "inhibitor") is for obtaining a graphite electrode by calcination together with a needle coke.
The inhibitor of one embodiment the present invention includes at least one of a metal consisting of an element (Mβ) and an oxide including the element (Mβ).
Elements (Mβ): At least one element selected from the group consisting of group 4 elements (Ti, Zr, and Hf), group 8 elements (Fe, Ru, and Os), group 9 elements (Co, Rh, and Ir), group 10 elements (Ni, Pr, and Pt), group 13 elements (B, Al, Ga, and In), group 14 elements (Si, Ge, and Sn) and group 15 elements (P, Sb, and Bi) of the long-form periodic table.

1.1. First embodiment

The inhibitor of the first embodiment contains a composite oxide having an element (Mα) and an element (Mβ).

Element (Mα): At least one metal element excluding the element (Mβ).
Elements (Mβ): At least one element selected from the group consisting of group 4 elements (Ti, Zr, and Hf), group 8 elements (Fe, Ru, and Os), group 9 elements (Co, Rh, and Ir), group 10 elements (Ni, Pr, and Pt), group 13 elements (B, Al, Ga, and In), group 14 elements (Si, Ge, and Sn) and group 15 elements (P, Sb, and Bi) of the long-form periodic table.

The element (Mα) is preferably at least one metal element selected from the group consisting of K, Sc, alkaline earth metal elements (Mg, Ca, Sr, and Ba) and rare earth metal elements (Y, La, Ce, Pr, Nd, Pm, Sm, Eu, Gd, Tb, Dy, Ho, Er, Tm, Yb, and Lu), more preferably at least one metal element selected from the group consisting of alkaline earth metals and rare earth metal elements, particularly preferably at least one metal element selected from the group consisting of alkaline earth metals and rare earth metal elements, most preferably an alkaline earth metal, in terms of ease in reducing puffing.

The element (Mβ) is preferably at least one element selected from the group consisting of Si, Ge, Al, B, Ti, Fe and P, more preferably at least one element selected from Si and Ge, and most preferably Si, in terms of ease in reducing puffing.

The composition of the inhibitor of the first embodiment is not particularly limited, but the inhibitor preferably has a composition of the following formula (1) in terms of ease in reducing puffing.

$$M\alpha_{3-x}M\beta_{1-y}O_{5-z} \qquad (1),$$

wherein $0 \leqq x < 3$, $0 \leqq y < 1$, and $0 \leqq z < 5$.

In the formula (1), x is preferably $0 \leqq x < 3$, more preferably $0.05 \leqq x \leqq 2.5$, particularly preferably $0.1 \leqq x \leqq 2$, in terms of ease in reducing puffing.

In the formula (1), y is preferably $0 \leqq y < 1$, more preferably $0.01 \leqq y \leqq 0.8$, particularly preferably $0.1 \leqq y \leqq 0.5$, in terms of ease in reducing puffing.

In the formula (1), z is preferably $0 \leqq z < 5$, more preferably $0.05 \leqq z \leqq 4$, particularly preferably $0.1 \leqq z \leqq 3$, in terms of ease in reducing puffing.

Specific examples of composite oxides containing the element (Mα) and the element (Mβ) include $MgSi_3O_7$, $Mg_3SiO_5$, $Mg_{14}Si_5O_{24}$, $MgO$, $Ca_3SiO_5$, $Ca_2SiO_4$, $CaSiO_3$, $Ca_8Si_5O_{18}$, $CaSi_2O_5$, $CaO$, $CaCO_3$, $Ca(OH)_2$, $SrSiO_3$, $Sr_3SiO_5$, $SrSi_2O_5$, $Sr_2SiO_4$, $Ba_3SiO_5$, $Ba_2SiO_4$, $BaSiO_3$, $BaSi_2O_5$, $Ba_2Si_3O_8$, $Ba_5Si_8O_{21}$, $Ba_3Si_5O_{13}$, $Ba_2SiO_4$, $BaO$, $BaCO_3$, $Ce_2SiO_5$, $Ce_2Si_2O_7$, $Ce_2Si_4O_{11}$, $CeSi_3O_8$, $Ce_3SiO_8$, $Ce_6Si_6O_{21}$, $La_5Si_3O_{13.5}$, $La_6Si_6O_{21}$, $La_2SiO_5$, $La_2Si_4O_{11}$, $La_2Si_6O_{16}$, $Pr_{4.67}Si_3O_{13}$, $Pr_2Si_2O_7$, $Pr_6Si_2$, $Pr_6Si_{12}O_{25}$, $Eu_5Si_3O_{13}$, $Eu_2S\ i_2O_7$, $Eu_2SiO_4$, $Eu_6Si_{12}O_{33}$, $CaGe_2O_5$, $Ca_3GeO_5$, $Ca_2GeO_4$, $Ca_5Ge_3O_{11}$, $CaGeO_3$, $Ca_2Ge_7O_{16}$, $CaAl_{12}O_{19}$, $CaAl_4O_7$, $Ca_4Al_6O_{13}$, $Ca_5Al_6O_{14}$, $Ca_6Al_7O_{16}$, $Ca_2Al_2O_5$, $Ca_3Al_2O_6$, $CaFeO_2$, $Ca_2Fe_2O_5$, $CaFeO_3$, $CaFe_2O_4$, $CaFe_3O_5$, $CaFe_4O_6$, $CaFe_5O_7$, $CaFe_6O_8$, $CaTi_2O_4$, $CaTi_2O_5$, $Ca_3Ti_2O_7$, $Ca_4Ti_3O_{10}$, $CaTiO_3$, $CaTi_5O_{11}$, $Mg_2Al_4O_8$, $MgAl_2O_4$, $Mg_2Al_2O_5$, $MgGe_2O_4$, $Mg_2TiO_4$, $MgTiO_3$, $MgTi_2O_4$, $MgTi_2O_5$, $MgFe_2O_4$, $SrAl_{12}O_{19}$, $SrAl_4O_7$, $Sr_4Al_{14}O_{25}$, $Sr_{12}Al_{14}O_{33}$, $Sr_3Al_2O_6$, $Sr_{10}Al_6O_{19}$, $Sr_3GeO$, $SrGe_4O_9$, $SrGeO_3$, $Sr_3GeO_5$, $SrTi_{11}O_{20}$, $Sr_2Ti_6O_{13}$, $SrTiO_3$, $Sr_4Ti_3O_{10}$, $Sr_3Ti\ _2O_7$, $Sr_2TiO_4$, $SrFe_{12}O_9$, $SrFe_2O_4$, $Sr_2Fe_3O_6$, $SrFeO_2$, $Sf_4Fe_6O_{13}$, $Sr_2Fe_2O_5$, $Sr_3Fe_2O_5$, $Sr_4Fe_{44}O_{11}$, $SrFeO_3$, $Sr_3Fe_2O_6$, $Sr_2FeO_3$, $Sr_3Fe_2O_7$, $SrFeO_4$, $Sr_2FeO_4$, $BaAl_{12}O_{19}$, $BaAl_4O_7$, $BaAl_2O_4$, $Ba_3Al_2O_6$, $Ba_4Al_2O_7$, $Ba_7Al_2O_{10}$, $Ba_{17}Al_3O_7$, $Ba_{21}Ge_2O_5$, $Ba_3GeO$, $Ba_3GeO_5$, $Ba_{10}Ge_7O_3$, $BaGeO_3$, $BaGe_2O_5$, $Ba_2Ge_5O_{12}$, $BaGe_4O_9$, $Ba_3TiO_5$, $Ba_2TiO_4$, $Ba_4Ti_5O_{10}$, $Ba_4Ti_4O_{11}$, $BaTiO_3$, $BaTi_2O_5$, $BaTi_4O_9$, $Ba_2Ti_9O_{20}$, $BaTi_5O_{11}$, $Ba_2Ti_{13}O_{22}$, $Ba_3FeO_5$, $Ba_2FeO_4$, $BaFeO_2$, $Ba_2Fe_2O_5$, $Ba_8Fe_8O_{21}$, $Ba_5Fe_5O_{14}$, $BaFeO_3$, $BaFe_2O_4$, $Ba_2Fe_6O_{11}$, $BaFe_4O_7$, $BaFe_7O_{11}$, $BaFe_{12}O_{19}$, and $BaFe_{15}O_{23}$. The composite oxide contained in the inhibitor of the first embodiment may be either of one type of two or more types.

With respect to the inhibitor of the first embodiment, the puffing value $P_{2100}$ calculated by the formula (1) for the test piece prepared in the evaluation test (i) is preferably 1.00 % or less, in terms of more surely suppressing the puffing of needle coke during the production of a graphite electrode.

$$P_{2100} = (L2 - L1)/L1 \times 100 \qquad (I),$$

wherein:

L1 is a thickness (mm) of the test piece before calcination, and
L2 is a thickness (mm) of the test piece after calcination up to 2100 °C; and

<Evaluation test (i)>

A coal-based needle coke, a binder pitch in an amount of 30 % by weight in terms of an outer percentage based on an amount of the coal-based needle coke, and the inhibitor are mixed, followed by kneading for 5 minutes while heating at 165 °C to obtain a kneaded product. The resulting kneaded product is molded into a disk of 20 mmΦ × 3 mm to 15 mm, followed by precalcination at 1000 °C for 3 hours using a calcination furnace to burn off the binder pitch to obtain a test piece. The test piece is heated to 2100 °C at a heating rate of 20 °C/min to perform a calcination of the test piece, wherein the L1 and the L2 of the test piece are respectively measured before and after the calcination of the test piece.

The puffing value $P_{2100}$ is preferably 1.00 % or less, more preferably 0.00 % or less, even more preferably -1.00 % or less, particularly preferably -2.00 % or less, most preferably -3.00 % or less. The lower limit of the puffing value $P_{2100}$ is not particularly limited, but is preferably -30 % or more, more preferably -20 % or more, particularly preferably -15 % or more, most preferably -10 % or more. The lower limit values and the upper limit values for the puffing

value $P_{2100}$ can be combined in any manner. For example, the puffing value $P_{2100}$ is preferably -30 % or more and 1.00 % or less.

With respect to the inhibitor of the first embodiment, the puffing value $P_{2800}$ calculated by the formula (II) for the test piece prepared in the evaluation test (ii) is preferably 2.9 % or less, in terms of more surely suppressing the puffing of needle coke during the production of a graphite electrode.

$$P_{2800} = (L3 - L1)/L1 \times 100 \qquad (II),$$

wherein:

L1 is a thickness (mm) of the test piece before calcination, and
L3 is a thickness (mm) of the test piece after calcination up to 2800 °C.

<Evaluation test (ii)>

A coal-based needle coke, a binder pitch in an amount of 30 % by weight in terms of an outer percentage based on an amount of the coal-based needle coke, and the inhibitor are mixed, followed by kneading for 5 minutes while heating at 165 °C to obtain a kneaded product. The kneaded product is molded into a disk of 20 mmΦ × 3 mm to 15 mm, followed by precalcination at 1300 °C for 3 hours using a calcination furnace to burn off the binder pitch to obtain a test piece. The test piece is heated to 2800 °C at a heating rate of 20 °C/min to perform a calcination of the test piece, wherein the L1 and the L3 of the test piece are respectively measured before and after the calcination of the test piece.

The puffing value $P_{2800}$ is preferably 2.9 % or less, more preferably 2.5 % or less, particularly preferably 2.2 % or less, most preferably 2.0 % or less. Further, the lower limit of the puffing value $P_{2800}$ is not particularly limited, but is preferably -5.0 % or more, more preferably -3.0 % or more, particularly preferably - 1.0 % or more, most preferably 0 % or more. The lower limit values and the upper limit values for the puffing value $P_{2800}$ can be combined in any manner. For example, the puffing value $P_{2800}$ is preferably -5.0 % or more and 2.9 % or less.

The method for producing the inhibitor of the first embodiment is not particularly limited, and one example thereof is a method in which the raw material compounds are weighed out and mixed so as to provide a desired composite oxide proportion, and the resulting mixture is calcined in an air atmosphere and a reducing atmosphere at a temperature within the range of 1000 °C to 1500 °C. Further, the upper limit of the particle size of the obtained inhibitor is not particularly limited, but is more preferably 10000 μm or less, particularly preferably 1000 μm or less, most preferably 100 μm or less. Also, the lower limit of the particle size is not particularly limited, but is more preferably 1 nm or more, particularly preferably 10 nm or more, most preferably 100 nm or more. The particle size controlled within this range allows the inhibitor to be uniformly dispersed with ease, and is expected to allow the inhibitor to maintain its crystallinity and to enhance the puffing effect.

In the present specification, the "particle size" of the inhibitor means a mode diameter measured by a method using a laser diffraction particle size distribution meter MT3300EX (manufactured by MicrotracBEL Corporation) and using ethanol as a dispersion medium.

The inhibitor of the first embodiment containing the composite oxide having the element (Mα) and the element (Mβ) increases the puffing suppression effect, and improves the production yield and performances of the graphite electrode. The reason why the inhibitor of the first embodiment shows such effects has not yet been elucidated, but is assumed to be as follows.

By adding the inhibitor of the first embodiment during the calcination of needle coke for a graphite electrode, a complex compound containing nitrogen is formed at a temperature lower than the temperature at which nitrogen is desorbed from the graphite electrode, or a complex compound containing sulfur is formed. This presumably results in timing discrepancy for nitrogen desorption and sulfur desorption as compared to the inhibitor-free system, and thereby suppresses the puffing phenomenon. That is, it is presumed that, since the inhibitor of the first embodiment contains the composite oxide having the element (Mα) and the element (Mβ), the composite oxide reacts with nitrogen or sulfur in the coke during the heating process for the calcination to form composite compounds (i.e., nitrides, oxynitrides, sulfides, and oxysulfides), which produces the effects of the first embodiment.

1.2. Second embodiment

The inhibitor of the second embodiment includes a metal consisting of an element (Mα) or an oxide including the element (Mα), and a metal consisting of an element (Mβ) or an oxide including the element (Mβ). The inhibitor of the second embodiment preferably includes the oxide including the element (Mα) and the oxide including the element (Mβ) in terms of ease in reducing puffing.

Element (Mα): At least one metal element excluding the element (Mβ).

Element (Mβ): At least one element selected from the group consisting of group 4 elements, group 8 elements, group 9 elements, group 10 elements, group 13 elements, group 14 elements and group 15 elements of the long-form periodic table.

(Metal consisting of element (Mα) or oxide including element (Mα))

The element (Mα) is preferably at least one metal element selected from the group consisting of K, Sc, alkaline earth metal elements and rare earth metal elements, more preferably at least one metal element selected from the group consisting of Sc, alkaline earth metals and rare earth metal elements, particularly preferably at least one metal element selected from the group consisting of alkaline earth metals and rare earth metal elements, most preferably an alkaline earth metal, in terms of ease in reducing puffing.

The composition of the oxide containing the element (Mα) is not particularly limited, but the oxide preferably has a composition of the following formula (2) in terms of ease in reducing puffing.

$$M\alpha_{3-x1}O_{3-z1} \qquad (2),$$

wherein Mα is the element (Mα), $0 \leq x1 < 3$, and $0 \leq z1 < 3$.

In the formula (2), x1 is preferably $0 \leq x1 < 3$, more preferably $0.05 \leq x1 \leq 2.5$, particularly preferably $0.1 \leq x1 \leq 2$, in terms of ease in reducing puffing.

In the formula (2), z1 is preferably $0 \leq z1 < 3$, more preferably $0.05 \leq z1 \leq 2.5$, particularly preferably $0.1 \leq z1 \leq 2$, in terms of ease in reducing puffing.

Specific examples of metals consisting of the element (Mα) or oxides including the element (Mα) include $CaO$, $Ca(OH)_2$, $CaCO_3$, $Ca$, $MgO$, $MgCO_3$, $Mg(OH)_2$, $Mg$, $SrO$, $SrCO_3$, $Sr(OH)_2$, $Sr$, $BaO$, $BaCO_3$, $Ba(OH)_2$, $Ba$, $CeO_2$, $Ce$, $Pr_6O_{11}$, $Pr$, $Eu_2O_3$, and $Eu$. The oxide including the element (Mα) contained in the inhibitor of the second embodiment may be either of one type or two or more types.

(Metal consisting of element (Mβ) or oxide including element (Mβ))

The element (Mβ) is preferably at least one element selected from the group consisting of Si, Ge, Al, B, Ti, Fe and P, more preferably at least one element selected from Si and Ge, and most preferably Si, in terms of ease in reducing puffing.

The composition of the oxide containing the element (Mβ) is not particularly limited, but the oxide preferably has a composition of the following formula (3) in terms of ease in reducing puffing.

$$M\beta_{1-y1}O_{2-z2} \qquad (3),$$

wherein Mβ is the element (Mβ), $0 \leq y1 < 1$, and $0 \leq z2 < 2$.

In the formula (3), y1 is preferably $0 \leq y1 < 1$, more preferably $0.01 \leq y1 \leq 0.8$, particularly preferably $0.1 \leq y1 \leq 0.5$, in terms of ease in reducing puffing.

In the formula (3), z2 is preferably $0 < z2 \leq 2$, more preferably $0.05 \leq z2 \leq 0.15$, particularly preferably $0.1 \leq z2 \leq 0.2$, in terms of ease in reducing puffing.

Specific examples of metals consisting of the element (Mβ) or oxides including the element (Mβ) include $SiO_2$, $Si$, $SiO_x$, $GeO_2$, $Ge$, $Al_2O_3$, $Al$, $B_2O_3$, and $P_2O_5$. The oxide including the element (Mβ) contained in the inhibitor of the second embodiment may be either of one type or two or more types.

With respect to the inhibitor of the second embodiment, the puffing value $P_{2100}$ calculated by the formula (1) for the test piece prepared in the evaluation test (i) is preferably 1.00 % or less, in terms of more surely suppressing the puffing of needle coke during the production of a graphite electrode.

The puffing value $P_{2100}$ is preferably 1.00 % or less, more preferably 0.50 % or less, even more preferably 0.00 % or less, particularly preferably -1.00 % or less, most preferably -2.00 % or less. The lower limit of the puffing value $P_{2100}$ is not particularly limited, but is preferably -30 % or more, more preferably -20 % or more, particularly preferably -15 % or more, most preferably -10 % or more. The lower limit values and the upper limit values for the puffing value $P_{2100}$ can be combined in any manner. For example, the puffing value $P_{2100}$ is preferably -30 % or more and 1.00 % or less.

With respect to the inhibitor of the second embodiment, the puffing value $P_{2800}$ calculated by the formula (II) for the test piece prepared in the evaluation test (ii) is preferably 2.9 % or less, in terms of more surely suppressing the puffing of needle coke during the production of a graphite electrode.

The puffing value $P_{2800}$ is preferably 2.9 % or less, more preferably 2.5 % or less, particularly preferably 2.2 % or less, most preferably 2.0 % or less. Further, the lower limit of the puffing value $P_{2800}$ is not particularly limited, but is preferably -5.0 % or more, more preferably -3.0 % or more, particularly preferably - 1.0 % or more, most preferably 0 % or more. The lower limit values and the upper limit values for the puffing value $P_{2800}$ can be combined in any manner. For example, the puffing value $P_{2800}$ is preferably -5.0 % or more and 2.9 % or less.

The method for producing the inhibitor of the second embodiment is not particularly limited, and one example thereof is a method in which the element $(M\alpha)$ and the element $(M\beta)$ are weighed out and mixed so as to provide a desired proportion, and the resulting mixture is calcined in an air atmosphere and a reducing atmosphere at a temperature within the range of 1000 °C to 1500 °C, to thereby obtain an inhibitor in the form of a composite of an oxide including the element $(M\alpha)$ and an oxide including the element $(M\beta)$. Alternatively, the inhibitor may be prepared by mixing an oxide including the element $(M\alpha)$ and an oxide including the element $(M\beta)$. The particle size of the inhibitor obtained in the form of a composite is not particularly limited, but is more preferably 10000 $\mu$m or less, particularly preferably 1000 $\mu$m or less, most preferably 100 $\mu$m or less. Also, the lower limit of the particle size is not particularly limited, but is more preferably 1 nm or more, particularly preferably 10 nm or more, most preferably 100 nm or more. The particle size controlled within this range allows the inhibitor to be uniformly dispersed with ease, and is expected to enhance the puffing effect.

The mixing ratio of the oxide containing the element $(M\alpha)$ and the oxide containing the element $(M\beta)$ (the oxide containing the element $(M\alpha)$ and the oxide containing the element $(M\beta)$) is not particularly limited; however, for achieving low puffing, the lower limit of the mixing ratio in terms of a weight ratio of the oxide containing the element $(M\beta)$ to the oxide containing the element $(M\alpha)$ is usually 0.01 or more, preferably 0.05 or more, more preferably 0.1 or more. On the other hand, the upper limit is usually 1 or less, preferably 0.7 or less, more preferably 0.5 or less.

The inhibitor of the second embodiment containing the metal consisting of an element $(M\alpha)$ or the oxide including the element $(M\alpha)$, and the metal consisting of the element $(M\beta)$ or the oxide including the element $(M\beta)$ increases the puffing suppression effect, and improves the production yield and performances of the graphite electrode. The reason why the inhibitor of the second embodiment shows such effects has not yet been elucidated, but is assumed to be as follows.

By adding the inhibitor of the second embodiment during the calcination of needle coke for a graphite electrode, a complex compound containing nitrogen is formed at a temperature lower than the temperature at which nitrogen is desorbed from the graphite electrode, or a complex compound containing sulfur is formed. This presumably results in timing discrepancy for nitrogen desorption and sulfur desorption as compared to the inhibitor-free system, and thereby suppresses the puffing phenomenon. That is, it is presumed that, since the inhibitor of the second embodiment contains the oxide including the element $(M\alpha)$ and the oxide including the element $(M\beta)$, the oxides react with nitrogen or sulfur in the coke during the heating process for the calcination to form composite compounds (i.e., nitrides, oxynitrides, sulfides, and oxysulfides), which produces the effects of the second embodiment.

### 1.3. Third embodiment

Another example of the embodiment of the inhibitor of the present invention is described below.

The inhibitor of the third embodiment the present invention includes at least one of a metal consisting of an element $(M\beta)$ or a compound including the element $(M\beta)$, and volatilizes at a temperature of 2100 to 6000 °C, wherein the element $(M\beta)$ is at least one element selected from the group consisting of group 4 elements, group 8 elements, group 9 elements, group 10 elements, group 13 elements, group 14 elements and group 15 elements of the long-form periodic table.

The temperature at which the inhibitor volatilizes is preferably 2100 °C or higher, more preferably 2400 °C or higher, even more preferably 2600 °C or higher, particularly preferably 2700 °C or higher, most preferably 2800 °C or higher, in terms of ease in reducing puffing. The upper limit of the temperature at which the inhibitor volatilizes is preferably 6000 °C of lower, more preferably 5000 °C or lower, even more preferably 4000 °C or lower, particularly preferably 3500 °C or lower, most preferably 3000 °C or lower, in order to reduce puffing. The lower limit values and upper limit values of the temperature at which the inhibitor volatilizes can be combined in any manner.

The inhibitor of the third embodiment is added to a needle coke, and the proportion (% by weight) of the inhibitor based on the total amount of the needle coke is defined as X, while the proportion (% by weight) of the inhibitor based on the total amount of the needle coke after heat-treated at 2800 °C for 30 minutes is defined as Y In this context, it is preferable that Y/X < 0.01 in terms of ease in reducing puffing.

The value of Y/X is more preferably 0.004 or less, particularly preferably 0.0005 or less. The lower limit of the value of Y/X is preferably 0.000001 or more, more preferably 0.00001 or more, in terms of ease in reducing puffing.

The element $(M\beta)$ is preferably at least one element selected from the group consisting of Si, Ge, Al, B, Ti, Fe and P, more preferably at least one element selected from Si and Ge, and most preferably Si, in terms of ease in reducing puffing.

As the compound containing the element $(M\beta)$, an oxide containing the element $(M\beta)$ is preferable in terms of ease in reducing puffing. The composition of the oxide containing the element $(M\beta)$ is not particularly limited, but the oxide preferably has a composition of the following formula (4) in terms of ease in reducing puffing.

$$M\beta_{1-y2}O_{2-z3} \qquad (4),$$

wherein $M\beta$ is an element ($M\beta$), $0 \leqq y2 < 1$, and $0 \leqq z3 < 2$.

In the formula (4), y2 is preferably $0 \leqq y2 < 1$, more preferably $0.001 \leqq y2 \leqq 0.1$, in terms of ease in reducing puffing.

In the formula (4), z3 is preferably $0 \leqq z3 < 2$, more preferably $0.001 \leqq z3 \leqq 0.1$, in terms of ease in reducing puffing.

Specific examples of oxides including the element ($M\beta$) include $SiO_2$, Si, $SiO_x$, $GeO_2$, Ge, $Al_2O_3$, Al, $B_2O_3$, and $P_2O_5$. The compound including the element ($M\beta$) contained in the inhibitor of the third embodiment may be either of one type or two or more types.

The compound including the element ($M\beta$) may further includes the following element ($M\alpha$-1).

Element ($M\alpha$-1): At least one metal element including at least an alkaline earth metal element, excluding the element ($M\beta$).

The element ($M\alpha$-1) is preferably at least one metal element selected from the group consisting of K, Sc, alkaline earth metal elements and rare earth metal elements, more preferably at least one metal element selected from the group consisting of alkaline earth metal elements and rare earth metal elements, most preferably an alkaline earth metal, in terms of ease in reducing puffing.

As the compound containing the element ($M\alpha$-1) and the element ($M\beta$), a composite oxide containing the element ($M\alpha$-1) and the element ($M\beta$) is preferable because puffing in terms of ease in reducing puffing. The composition of the composite oxide containing the element ($M\alpha$-1) and the element ($M\beta$) is not particularly limited, but the composite oxide preferably has a composition of the following formula (5) in terms of ease in reducing puffing.

$$M\alpha_{3-x2}M\beta_{1-y3}O_{5-z4} \qquad (5),$$

wherein $M\alpha$ is the element ($M\alpha$-1), $M\beta$ is the element ($M\beta$), $0 \leqq x2 < 3$, $0 \leqq y3 < 1$, and $0 \leqq z4 < 5$.

In the formula (5), x2 is preferably $0 \leqq x2 < 3$, more preferably $0.05 \leqq x2 \leqq 2.5$, particularly preferably $0.1 \leqq x2 \leqq 2$, in terms of ease in reducing puffing.

In the formula (5), y3 is preferably $0 \leqq y3 < 1$, more preferably $0.01 \leqq y3 \leqq 0.8$, particularly preferably $0.1 \leqq y3 \leqq 0.5$, in terms of ease in reducing puffing.

In the formula (5), z4 is preferably $0 \leqq z4 < 5$, more preferably $0.05 \leqq z4 \leqq 4$, particularly preferably $0.1 \leqq z4 \leqq 3$, in terms of ease in reducing puffing.

Specific examples of composite oxides containing the element ($M\alpha$-1) and the element ($M\beta$) include $MgSi_3O_7$, $Mg_3SiO_5$, $Mg_{14}Si_5O_{24}$, MgO, $Ca_3SiO_5$, $Ca_2SiO_4$, $CaSiO_3$, $Ca_8Si_5O_{18}$, $CaSi_2O_5$, CaO, $CaCO_3$, $Ca(OH)_2$, $SrSiO_3$, $Sr_3SiO_5$, $SrSi_2O_5$, $Sr_2SiO_4$, $Ba_3SiO_5$, $Ba_2SiO_4$, $BaSiO_3$, $BaSi_2O_5$, $Ba_2Si_3O_8$, $Ba_5Si_8O_{21}$), $Ba_3Si_5O_{13}$, $Ba_2SiO_4$, BaO, $BaCO_3$, $Ce_2SiO_5$, $Ce_2Si_2O_7$, $Ce_2Si_4O_{11}$, $CeSi_3O_8$, $Ce_3SiO_8$, $Ce_6Si_6O_{21}$, $La_5Si_3O_{13.5}$, $La_6Si_6O_{21}$, $La_2S1O_5$, $La_2Si_4O_{11}$, $La_2Si_6O_{16}$, $Pr_{4.67}Si_3O_{13}$, $Pr_2Si_2O_7$, $Pr_6Si_2$, $Pr_6Si_{12}O_{25}$, $Eu_5Si_3O_{13}$, $Eu_2Si_2O_7$, $Eu_2SiO_4$, $Eu_6Si_{12}O_{33}$, $CaGe_2O_5$, $Ca_3GeO_5$, $Ca_2GeO_4$, $Ca_5Ge_3O_{11}$, $CaGeO_3$, $Ca_2Ge_7O_{16}$, $CaAl_{12}O_{19}$, $CaAl_4O_7$, $Ca_4Al_6O_{13}$, $Ca_5Al_6O_{14}$, $Ca6Al_7O_{16}$, $Ca_2Al_2O_5$, $Ca_3Al_2O_6$, $CaFeO_2$, $Ca_2Fe_2O_5$, $CaFeO_3$, $CaFe_2O_4$, $CaFe_3O_5$, $CaFe_4O_6$, $CaFe_5O_7$, $CaFe_6O8$, $CaTi_2O_4$, $CaTi_2O_5$, $Ca_3Ti_2O_7$, $Ca_4Ti_3O_{10}$, $CaTiO_3$, $CaTi_5O_{11}$, $Mg_2Al_4O_8$, $MgAl_2O_4$, $Mg_2Al_2O_5$, $MgGe_2O_4$, $Mg_2TiO_4$, $MgTiO_3$, $MgTi_2O_4$, $MgTi_2O_5$, $MgFe_2O_4$, $SrAl_{12}O_{19}$, $SrAl_4O_7$, $Sr_4Al_{14}O_{25}$, $Sr_{12}Al_{14}O_{33}$, $Sr_3Al_2O_6$, $Sr_{10}Al_6O_{19}$, $Sr_3GeO$, $SrGe_4O_9$, $SrGeO_3$, $Sr_3GeO_5$, $SrTi_{11}O_{20}$, $Sr_2Ti_6O_{13}$, $SrTiO_3$, $Sr4T_{13}O_{10}$, $Sr_3Ti_2O_7$, $Sr_2TiO_4$, $SrFe_{12}O_9$, $SrFe_2O_4$, $Sr_2Fe_3O_6$, $SrFeO_2$, $Sr4Fe_6O_{13}$, $Sr_2Fe_2O_5$, $Sr_3Fe_2O_5$, $Sr_4Fe_{44}O_{11}$, $SrFeO_3$, $Sr_3Fe_2O_6$, $Sr_2FeO_3$, $Sr_3Fe_2O_7$, $SrFeO_4$, $Sr_2FeO_4$, $BaAl_{12}O_{19}$, $BaAl_4O_7$, $BaAl_2O_4$, $Ba_3Al_2O_6$, $Ba_4Al_2O_7$, $Ba_7A_{l2}O_{10}$, $Ba_{17}Al_3O_7$, $Ba_{21}Ge_2O_5$, $Ba_3GeO$, $Ba_3GeO_5$, $Ba_{10}Ge_7O_3$, $BaGeO_3$, $BaGe_2O_5$, $Ba_2Ge_3O_{12}$, $BaGe_4O_9$, $Ba_3TiO_5$, $Ba_2TiO_4$, $Ba_4Ti_5O_{10}$, $Ba_4Ti_4O_{11}$, $BaTiO_3$, $BaTi_2O_5$, $BaTi_4O_9$, $Ba_2Ti_9O_{20}$, $BaTi_5O_{11}$, $Ba_2Ti_{13}O_{22}$, $Ba_3FeO_5$, $Ba_2FeO_4$, $BaFeO_2$, $Ba_2Fe_2O_5$, $Ba_8Fe_8O_{21}$, $Ba_5Fe_5O_{14}$, $BaFeO_3$, $BaFe_2O4$, $Ba_2Fe_6O_{11}$, $BaFe_4O_7$, $BaFe_7O_{11}$, $BaFe_{12}O_{19}$, and $BaFe_{15}O_{23}$. The compound contained in the inhibitor of the third embodiment may be either of one type or two or more types.

The inhibitor of the third embodiment may further include a metal consisting of the element ($M\alpha$-1) or a compound including the element ($M\alpha$-1) in addition to at least one of the metal consisting of the element ($M\beta$) and the compound including the element ($M\beta$). The preferred element ($M\alpha$-1) in this case is the same as the preferred element ($M\alpha$-1) in the compound including the element ($M\alpha$-1) and the element ($M\beta$).

As the compound containing the element ($M\alpha$), an oxide containing the element ($M\alpha$-1) is preferable in terms of ease in reducing puffing. The composition of the oxide containing the element ($M\alpha$-1) is not particularly limited, but the oxide preferably has a composition of the following formula (6) in terms of ease in reducing puffing.

$$M\alpha_{3-x3}O_{3-z5} \qquad (6),$$

wherein M$\alpha$ is the element (M$\alpha$-1), $0 \leqq x3 < 3$, and $0 \leqq z5 < 3$.

In the formula (6), x3 is preferably $0 \leqq x3 < 3$, more preferably $0.05 \leqq x3 \leqq 2.5$, particularly preferably $0.1 \leqq x3 \leqq 2$, in terms of ease in reducing puffing.

In the formula (6), z5 is preferably $0 \leqq z5 < 3$, more preferably $0.05 \leqq z5 \leqq 2.5$, particularly preferably $0.1 \leqq z5 \leqq 2$, in terms of ease in reducing puffing.

Specific examples of oxides including the element (M$\alpha$-1) include $CaO$, $Ca(OH)_2$, $CaCO_3$, $Ca$, $MgO$, $MgCO_3$, $Mg(OH)_2$, $Mg$, $SrO$, $SrCO_3$, $Sr(OH)_2$, $Sr$, $BaO$, $BaCO_3$, $Ba(OH)_2$, $Ba$, $CeO_2$, $Ce$, $Pr_6O_{11}$, $Pr$, $Eu_2O_3$, and $Eu$. The compound including the element (M$\alpha$-1) contained in the inhibitor of the third embodiment may be either of one type or two or more types.

The inhibitor of the third embodiment is preferably reactive with sulfur compounds in terms of ease in reducing puffing. In this context, the inhibitor being "reactive with sulfur compounds" means that reaction between the inhibitor and sulfur compounds generates another compounds under the condition for the addition of the inhibitor to the needle coke.

The inhibitor of the third embodiment is preferably reactive with nitrogen compounds in terms of ease in reducing puffing. In this context, the inhibitor being "reactive with nitrogen compounds" means that reaction between the inhibitor and nitrogen compounds generates another compounds under the condition for the addition of the inhibitor to the needle coke.

With respect to the inhibitor of the third embodiment, the puffing value $P_{2100}$ calculated by the formula (I) for the test piece prepared in the evaluation test (i) is preferably 1.00 % or less, in terms of more surely suppressing the puffing of needle coke during the production of a graphite electrode.

The puffing value $P_{2100}$ is preferably 1.00 % or less, more preferably 0.50 % or less, even more preferably 0.00 % or less, particularly preferably -1.00 % or less, most preferably -2.00 % or less. The lower limit of the puffing value $P_{2100}$ is not particularly limited, but is preferably -30 % or more, more preferably -20 % or more, particularly preferably -15 % or more, most preferably -10 % or more. The lower limit values and the upper limit values for the puffing value $P_{2100}$ can be combined in any manner. For example, the puffing value $P_{2100}$ is preferably -30 % or more and 1.00 % or less.

With respect to the inhibitor of the third embodiment, the puffing value $P_{2800}$ calculated by the formula (II) for the test piece prepared in the evaluation test (ii) is preferably 2.9 % or less.

$$P_{2800} = (L3 - L1)/L1 \times 100 \qquad (II),$$

wherein:

L1 is a thickness (mm) of the test piece before calcination, and
L3 is a thickness (mm) of the test piece after calcination up to 2800 °C.

The puffing value $P_{2800}$ is preferably 2.9 % or less, more preferably 2.5 % or less, particularly preferably 2.2 % or less, most preferably 2.0 % or less. Further, the lower limit of the puffing value $P_{2800}$ is not particularly limited, but is preferably -5.0 % or more, more preferably -3.0 % or more, particularly preferably - 1.0 % or more, most preferably 0 % or more. The lower limit values and the upper limit values for the puffing value $P_{2800}$ can be combined in any manner. For example, the puffing value $P_{2800}$ is preferably -5.0 % or more and 2.9 % or less.

The method for producing the inhibitor of the third embodiment is not particularly limited, and one example thereof for the case of using an oxide is a method in which the raw materials are weighed out and mixed so as to provide a desired oxide proportion, and the resulting mixture is calcined in an air atmosphere and a reducing atmosphere at a temperature within the range of 1000 °C to 1500 °C. Further, the upper limit of the particle size of the obtained inhibitor is not particularly limited, but is more preferably 10000 $\mu$m or less, particularly preferably 1000 $\mu$m or less, most preferably 100 $\mu$m or less. Also, the lower limit of the particle size is not particularly limited, but is more preferably 1 nm or more, particularly preferably 10 nm or more, most preferably 100 nm or more. The particle size controlled within this range allows the inhibitor to be uniformly dispersed with ease, and is expected to allow the inhibitor to maintain its crystallinity and to enhance the puffing effect.

2. Needle coke for a graphite electrode

The needle coke for a graphite electrode according to the present invention includes a composition containing at least one of the inhibitors of the embodiments of the present invention and a needle coke.

2.1. Composition

The composition of the present invention is not particularly limited as long as it contains at least one of the inhibitors of the embodiments of the present invention and a needle coke. The composition is preferably one in which at least one of the inhibitors of the embodiments of the present invention is directly attached to the surface of the needle coke, since the puffing suppression effect can be increased while reducing the amount of inhibitor added.

The amount of the inhibitor with respect to 100 parts by weight of the needle coke in the composition is preferably 0.1 to 15 parts by weight, more preferably 0.5 to 3 parts by weight, in terms of ash content (metal component or metal oxide). When the amount of the inhibitor is within the above range, a sufficient puffing reduction effect can be easily be achieved, and there is hardly any influence of the residual ash on the electrode product.

The method for producing the composition is not particularly limited, but is preferably, for example, a method in which a solution or molten form of the inhibitor of the present invention is added to a needle coke before kneaded with a binder pitch, and the inhibitor of the present invention is directly attached to the surface of the needle coke, followed by heat treatment at 300 to 1500 °C. As the needle coke, agglomerates and granules of calcined coke, i.e., coarse coke without particle size adjustment, can be used. For adding the inhibitor in the form of a solution, the inhibitor may be added as an aqueous solution, or if the inhibitor is insoluble in water, the inhibitor may be added after being dissolved in a volatile solvent such as alcohol or benzene.

Since the composition obtained by the above production method has not had its particle size adjusted, it is preferable to mix fine coke or the like with the obtained composition to obtain a needle coke for a graphite electrode with its particle size adjusted before kneaded with a binder pitch. In this instance, the fine coke to be mixed is preferably used in an amount of 50 % by weight or less, more preferably 30 % by weight or less, based on the total amount of the needle coke for a graphite electrode.

It is also possible to add the inhibitor to coarse coke without particle size adjustment, and perform a pulverization step after the heat treatment. The pulverization step generates fine coke. In this case, fine coke to which no inhibitor is added may or may not be further mixed. Since fine coke has no direct influence on the puffing reduction effect, whether or not to mix fine coke may be appropriately determined in consideration of electrode quality such as ash content and economy.

2.2. Needle coke

The needle coke used in the present invention is described below in further detail. The needle coke used in the present invention is not particularly limited, but pitch-based needle coke is preferable because it has a low sulfur content and a low nitrogen content, has a small coefficient of thermal expansion, and can easily suppress puffing. Pitch-based needle coke can be suitably used as an aggregate for graphite electrodes for electric furnace steelmaking. Pitch-based needle coke can be produced by hydrogenating raw material coal tar pitch to obtain hydrogenated coal tar pitch and then coking the hydrogenated coal tar pitch.

Hydrogenated coal tar pitch is obtained by hydrogenating raw material coal tar pitch (hydrogenation step) and separating light oil from the resulting hydrogenated coal tar pitch (separation step). The light oil separated in the separation step can be supplied to the hydrogenation step and recycled. The method of hydrogenating raw material coal tar pitch and the method of separating light oil from hydrogenated coal tar pitch are not particularly limited, and known methods can be applied.

The raw material coal tar pitch is not particularly limited. The method for producing the raw material coal tar pitch (preparation method) is not particularly limited, and may be, for example, a method in which quinoline-insoluble matter is substantially removed from coal tar-based heavy oil. As a means for removing the quinoline-insoluble matter, known methods can be applied, but it is preferable to employ a method that involves treatment with a solvent that is an aromatic oil or an aliphatic oil, or a method that involves treatment with a mixed solvent of an aromatic oil and an aliphatic oil. Specifically, the solvent is mixed with coal tar-based heavy oil and heated under appropriate conditions, and after allowed to stand if necessary, the resulting the mixture is distilled to remove low-boiling point components to obtain a raw material coal tar pitch containing almost no quinoline-insoluble matter. Examples of aliphatic oils that can be used include alicyclic compounds, such as cyclohexane and cyclopentane; compounds having a carbonyl group, such as acetone and ethers; and light oil. Examples of aromatic oil that can be used include tar-based cleaning oil, anthracene oil, and the like.

In the production of hydrogenated coal tar pitch, heavy petroleum oil may be mixed with the raw material coal tar pitch. When heavy petroleum oil is mixed, after heavy coal tar oil and heavy petroleum oil are mixed, the quinoline-insoluble matter may be removed to obtain a mixture of the raw material coal tar pitch and the heavy petroleum oil. Further, a product obtained by separating light oil from the mixture of the raw material coal tar pitch and the heavy petroleum oil may be used in the hydrogenation step. Furthermore, a light oil-separated coal tar pitch obtained by separating light oil may be mixed with the petroleum heavy oil and used in the hydrogenation step.

The petroleum-based heavy oil is not particularly limited, and examples thereof include fluid catalytic cracking oil, atmospheric distillation residual oil, vacuum distillation residual oil, shale oil, tar sand bitumen, Orinoco tar, coal liquefaction oil, ethylene bottom oil, and heavy oils obtained by hydrorefining these oils. In addition to these, relatively light oils such as straight gas oil, vacuum gas oil, desulfurized gas oil, and desulfurized vacuum gas oil may be further contained.

The method for coking the hydrogenated coal tar pitch is not particularly limited, and examples thereof include delayed coking process, visbreaking process, flexicoking process, and Eureka process. Among these, the delayed coking process is preferable in terms of productivity and quality stability of the needle coke.

In the delayed coking process, hydrogenated coal tar pitch is rapidly passed through a heating tube while being heated, and introduced into a coke drum to allow the coking to occur. The coking conditions are not particularly limited, but the temperature is preferably 400 to 600 °C, and the coking time is preferably 18 to 72 hours.

The coke thus obtained is preferably calcined in a rotary kiln, a shaft furnace or the like. The calcination temperature is preferably 1000 to 1500 °C, and the calcination time is preferably 1 to 6 hours.

As raw materials for the coking, other raw materials may be used together with the hydrogenated coal tar pitch. Such raw materials are not limited, but may be, for example, heavy petroleum oils.

3. Graphite electrode

The graphite electrode of the present invention is a graphite electrode obtained by calcining the needle coke for a graphite electrode according to the present invention. The graphite electrode of the present invention can be obtained, for example, by kneading raw materials obtained by adding an appropriate amount of binder pitch to the needle coke for a graphite electrode according to the present invention, molding the resulting into a raw electrode, and calcining the obtained raw electrode to graphitize the raw electrode. In the production of a graphite electrode, the electrode may be processed after graphitization, if necessary.

Specific examples of the method for producing the graphite electrode of the present invention include a method in which the needle coke for a graphite electrode according to the present invention is kneaded with a binder pitch; iron oxide, if necessary, is further added and kneaded; and then extrusion molding, primary calcination, impregnation, secondary calcination, graphitization, etc. are performed. The use of iron oxide may be omitted, but if iron oxide is used, a further enhanced puffing reduction effect can be obtained. Whether or not to use iron oxide may be appropriately determined in consideration of required quality and economy.

The temperature for calcination is not particularly limited, but is preferably 300 to 1500 °C, more preferably 400 to 1400 °C, for the purpose of burning off the binder pitch.

4. Experimental results

Hereinbelow, the present invention will be described with reference to Examples which, however, should not be construed as limiting the present invention.

(1) Method for synthesizing inhibitor

The compounds were weighed out so as to provide a composition ratio prescribed for each example, mixed in a mortar, and calcined in an air atmosphere and a reducing atmosphere at a temperature within a range of 1000 °C to 1500 °C. The resulting compound was crushed to a particle size of 100 $\mu$m or less in a mortar to obtain an inhibitor.

(2) Puffing measurement method-1 (cold puffing method)

In each of the examples, a coal-based needle coke pulverized to a predetermined particle size, a binder pitch in an amount of 30 % by weight in terms of an outer percentage based on the amount of the coal-based needle coke, and the inhibitor in the amount shown in Tables 1 to 3 were mixed and kneaded for 5 minutes while heating at 165 °C. The resulting kneaded product was molded into a disk of 20 mm $\Phi \times$ 3 mm to 15 mm, followed by precalcination at 1000 °C or 1300 °C for 3 hours using a calcination furnace to burn off the binder pitch to obtain a test piece for puffing measurement. The test piece was heated up to 2100 °C or 2800 °C at a heating rate of 20 °C/min to perform a calcination (final calcination) of the test piece. The irreversible expansion ratio between before and after the calcination was calculated using the formula (1) or formula (ll) described above, and the obtained value was expressed as a cold puffing value. The cold puffing value for the precalcination temperature of 1000 °C and the final calcination temperature (maximum temperature of final calcination) of 2100 °C is the puffing value $P_{2100}$, and the cold puffing value for the precalcination temperature of 1300 °C and the final calcination temperature (maximum temperature of final calcination) of 2800 °C is the puffing value $P_{2800}$.

(3) Puffing measurement-2 (hot puffing)

The calcined coke was crushed and then adjusted to a predetermined particle size. To the resulting, a coal-based binder pitch was added in an amount of 30 % by weight in terms of an outer percentage based on the amount of the calcined coke. The resulting mixture was kneaded at 165 °C, and then molded into a cylindrical molded product using an extruder. Using a calcination furnace, the molded product was calcined at 1000 °C for 3 hours to obtain a test piece (cylinder). The test piece was heated from room temperature up to 2800 °C at a heating rate of 20 °C/min, and the elongation in the length direction of the test piece during this heating was measured with a push-rod thermal dilatometer, from which the hot puffing value was calculated by the following formula. In this context, the lengthwise dimension elongation of the test piece (cylinder) corresponds to the elongation in the direction perpendicular to the extrusion direction in the extrusion molding. The lower the hot puffing value, the better.

$$\text{Hot puffing value } (\%) = (\Delta L/L) \times 100,$$

wherein L is the length of the test piece before testing and $\Delta L$ is the lengthwise elongation of the test piece during heating up to 2800 °C.

(4) Measurement method for graphitized BD

With respect to the test piece after the calcination in the measurement method of item (2) above, the volume was calculated from the diameter and thickness of the test piece, and the weight of the test piece was measured. The weight was divided by the volume to calculate the bulk density as molded product BD (bulk density: BD).

(5) TPD-MS method

A test piece after calcination at 1300 °C obtained in the same manner as in the measurement method of (2) above was collected in a W crucible, and the collected amount was precisely weighed. The resulting was set in a quartz TPD tube set in an infrared heating furnace, heated up to 1700 °C at a rate of 100 °C/min while flowing He at 100 ccm, maintained at 1700 °C for 3 minutes, and then allowed to cool. During this process, the gas flowing out from the quartz TPD tube outlet was drawn into a time-of-flight mass spectrometer to monitor the composition profile of the gas components. Quantification was performed with respect to the area above the background in the obtained profile using the profile area-substance amount ratio of a separately measured sample or a standard gas calibration curve.

(6) Powder X-ray diffraction method

The test piece after the measurement by the TPD-MS method in (5) above was analyzed by an X-ray diffractometer. The measurement conditions were: CuKα, 40 kV, 50 mA, 2θ = 10-90°, and a sealed-tube X-ray diffractometer (Smart Lab SE manufactured by Rigaku Corporation) was used.

[Examples A1 to A20, Comparative Examples A1 to A7]

An inhibitor was synthesized by the method of item (1) above, a test piece was produced by the method of item (2) above, and the cold puffing value and the molded product density BD were measured. In Comparative Example A1, a test piece was produced in the same manner as in item (2) above except that no inhibitor was added. The composition, addition amounts, precalcination temperature, and final calcination temperature for the inhibitor in each example were as shown in Tables 1 to 3.

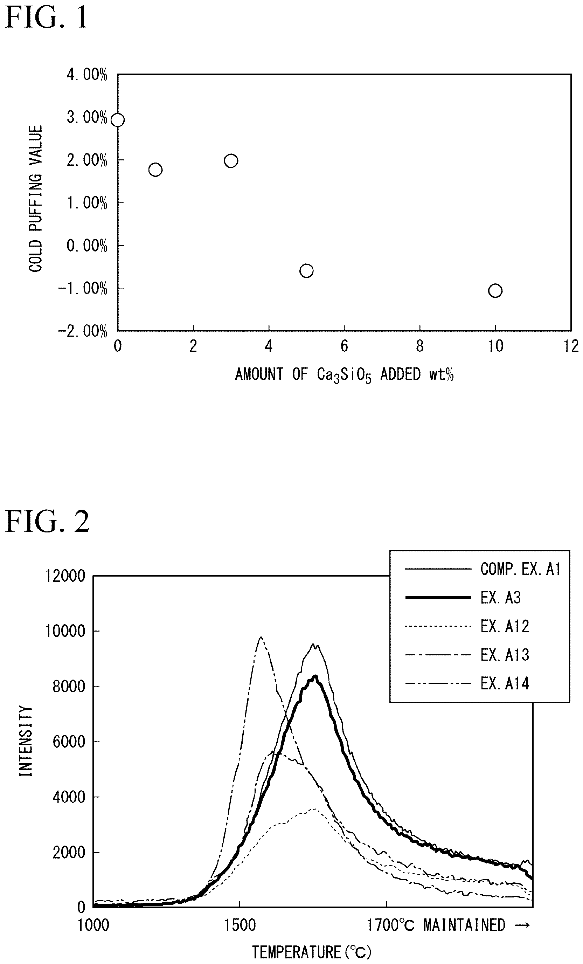

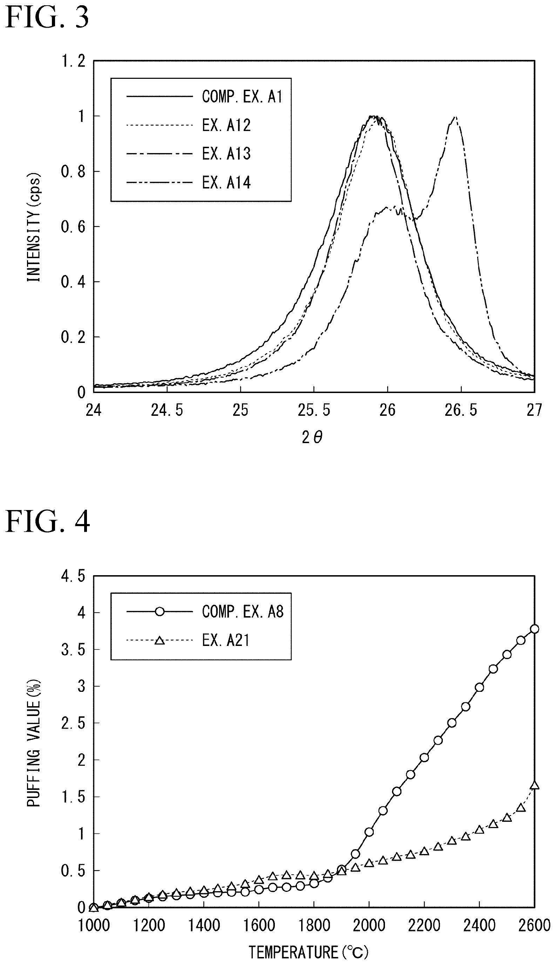

Tables 1 to 3 show the measurement results for the cold puffing value and the molded product density BD in each example. Further, for Examples A3, A12 to A14, and Comparative Example A1, the results of plotting the cold puffing values against the added amounts of $Ca_3SiO_5$ are shown in FIG. 1. FIG. 2 shows the measurement results of TPD-MS where the temperature was raised up to 1700 °C, and FIG. 3 shows the results of powder X-ray diffraction after the TPD-MS measurement.

[Table 1]

| | Inhibitor composition | Added amount (% by weight) | Precalcination temperature | Final calcination temperature | Cold puffing value | Molded product density BD |
|---|---|---|---|---|---|---|
| Example A1 | $MgSi_3O_7$ | 1 | 1300°C | 2800°C | 2.53% | 1.21 |
| Example A2 | $Ca_3SiO_5$ | 1 | 1300°C | 2800°C | 1.77% | 1.26 |
| Example A3 | $CaSiO_3$ | 1 | 1300°C | 2800°C | 1.97% | 1.22 |
| Comparative Example A1 | No Addition | 0 | 1300°C | 2800°C | 2.93% | 1.20 |
| Comparative Example A2 | $CaCO_3$ | 1 | 1300°C | 2800°C | 3.86% | 1.24 |
| Comparative Example A3 | MgO | 1 | 1300°C | 2800°C | 3.38% | 1.22 |
| Example A4 | $SrSiO_3$ | 2 | 1300°C | 2800°C | 2.14% | 1.22 |
| Example A5 | $Ba_3SiO_5$ | 2 | 1300°C | 2800°C | 2.15% | 1.23 |
| Example A6 | $BaSiO_3$ | 2 | 1300°C | 2800°C | 2.18% | 1.24 |
| Example A7 | $BaSi_2O_5$ | 2 | 1300°C | 2800°C | 1.80% | 1.23 |
| Example A8 | $Ce_2SiO_5$ | 2 | 1300°C | 2800°C | 1.70% | 1.26 |
| Example A9 | $Ce_2Si_2O_7$ | 2 | 1300°C | 2800°C | 1.54% | 1.27 |
| Example A10 | $Ce_2SiO$ | 2 | 1300°C | 2800°C | 1.83% | 1.28 |
| Example A11 | $CeSi_3O_8$ | 2 | 1300°C | 2800°C | 2.17% | 1.26 |
| Comparative Example A4 | $CeO_2$ | 2 | 1300°C | 2800°C | 2.21% | 1.26 |
| Comparative Example A5 | $La_2O_3$ | 2 | 1300°C | 2800°C | 2.25% | 1.27 |

[Table 2]

| | Inhibitor composition | Added amount (% by weight) | Precalcination temperature | Final calcination temperature | Cold puffing value | Molded product density BD |
|---|---|---|---|---|---|---|
| Comparative Example A1 | No Addition | 0 | 1300°C | 2800°C | 2.93% | 1.20 |
| Example A3 | $Ca_3SiO_5$ | 1 | 1300°C | 2800°C | 1.77% | 1.26 |
| Example A12 | $Ca_3SiO_5$ | 3 | 1300°C | 2800°C | 1.98% | 1.23 |
| Example A13 | $Ca_3SiO_5$ | 5 | 1300°C | 2800°C | -0.59% | 1.27 |
| Example A14 | $Ca_3SiO_5$ | 10 | 1300°C | 2800°C | -1.06% | 1.24 |

[Table 3]

|  | Inhibitor composition | Added amount (% by weight) | Precalcination temperature | Final calcination temperature | Cold puffing value | Molded product density BD |
|---|---|---|---|---|---|---|
| Example A15 | $Mg_3SiO_5$ | 2 | 1000°C | 2100°C | -0.75% | 1.21 |
| Example A16 | $Sr_3SiO_5$ | 2 | 1000°C | 2100°C | -0.40% | 1.28 |
| Example A17 | $Ba_3SiO_5$ | 2 | 1000°C | 2100°C | -0.16% | 1.33 |
| Example A18 | $Ca_3SiO_5$ | 2 | 1000°C | 2100°C | 0.35% | 1.31 |
| Example A19 | $Ca_3SiO_5$ | 0.5 | 1000°C | 2100°C | 0.66% | 1.29 |
| Example A20 | $Ca_3SiO_5$ | 0.25 | 1000°C | 2100°C | 0.71% | 1.29 |
| Comparative Example A6 | No addition | 0 | 1000°C | 2100°C | 1.30% | 1.27 |
| Comparative Example A7 | $Fe_2O_3$ | 2 | 1000°C | 2100°C | 1.05% | 1.32 |

As shown in Table 1, in Examples A1 to A11 with addition of the inhibitor of the first embodiment, the cold puffing value was small and the puffing suppression effect was high, as compared to Comparative Example A1 without addition of the inhibitor and Comparative Examples A2 to A5 with addition of other inhibitors. As shown in Table 3, also in Examples A15 to A20 with addition of the inhibitor of the first embodiment, the cold puffing value was small and the puffing suppression effect was high, as compared to Comparative Example A6 without addition of the inhibitor and Comparative Example A7 with addition of another inhibitor.

Further, as shown in Table 2 and FIG. 1, comparison between Comparative Example A1, Examples A3, and Examples A12 to A14 reveals that, as the amount of inhibitor added increased, the cold puffing value decreased and the puffing suppression effect increased.

Further, in Examples A1 to A20, the molded product density BD was sufficiently high.

As shown in the results of TPD-MS in FIG. 2, it was observed that the nitrogen desorption temperature shifted to the lower temperature side as the amount of the added inhibitor of the first embodiment was increased. Further, as shown in FIG. 3, when the spectrum was normalized at the peak top of powder X-ray diffraction $2\theta = 24°$ to $27°$ and the change in the diffraction peak was observed, it was found that, as the amount of the added inhibitor increased, the half-value width decreased. Particularly, concerning Example A14, it was confirmed that the peak of the 002 plane of the graphite crystal appeared. From these results, it is presumed that the addition of the inhibitor of the first embodiment promotes the graphite crystallization, and as the graphite crystallization progresses, nitrogen is desorbed, thereby reducing the puffing phenomenon.

[Examples A21, Comparative Examples A8]

2 % by weight of $Ca_3SiO_5$ synthesized by the method of item (1) above was added to prepare a test piece by the method of item (2) above, and the cold puffing values were measured. In Comparative Example A8, a test piece was prepared by the method of item (3) above without adding an inhibitor, and the hot puffing temperature was measured. FIG. 4 shows the measurement results of puffing values from 1000 °C to 2650 °C.

Further, considering that the temperature at which nitrogen puffing occurs is presumed to be 1700 °C to 2100 °C, for distinguishing between the nitrogen puffing and the sulfur puffing, the change of expansion ratio at a calcination temperature of 1700 °C to 2100 °C and the change of expansion ratio at a calcination temperature of 1700 °C to 2600 °C were calculated respectively. The results are shown in Table 4.

[Table 4]

|  | Elongation change ratio [ % ] | |
|---|---|---|
|  | 1700-2100°C | 1700-2600°C |
| Comparative Example A8 | 0.93 | 2.3 |

(continued)

|  | Elongation change ratio [ % ] | |
|---|---|---|
|  | 1700-2100°C | 1700-2600°C |
| Example A21 | -0.1 | 0.28 |

As shown in FIG. 4 and Table 4, in Comparative Example A8, puffing started to occur drastically immediately after the temperature exceeded around 1900 °C, whereas in Example A21, puffing did not occur in the temperature range where puffing was supposed to occur. Thus, it was confirmed that the inhibitor suppressed puffing.

[Examples A22 to A25)

An inhibitor was synthesized by the method of item (1) above, a test piece was produced by the method of item (2) above, and the cold puffing value and the molded product density BD were measured. The composition, addition amounts, precalcination temperature, and final calcination temperature for the inhibitor in each example were as shown in Table 5.

Table 5 shows the measurement results for the cold puffing value and the molded product density BD in each example.

[Table 5]

|  | Inhibitor composition | Added amount (% by weight) | Precalcination temperature | Final calcination temperature | Cold puffing value | Molded product density BD |
|---|---|---|---|---|---|---|
| Example A22 | $Ca_3GeO_5$ | 3.49 | 1000°C | 2100°C | -0.77% | 1.37 |
| Example A23 | $Ca_3Al_2O$ | 3.47 | 1000°C | 2100°C | -0.7% | 1.37 |
| Example A24 | $CaTiO_3$ | 4.6 | 1000°C | 2100°C | -0.72% | 1.37 |
| Example A25 | $Ca_2Fe_2O_5$ | 4.6 | 1000°C | 2100°C | -0.86% | 1.40 |

As shown in Table 5, also in Examples A22 to A25 with addition of the inhibitor of the first embodiment, the cold puffing value was small and the puffing suppression effect was high.

(7) Puffing measurement method (cold puffing method)

In each of the examples, a coal-based needle coke pulverized to a predetermined particle size, a binder pitch in an amount of 30 % by weight in terms of an outer percentage based on the amount of the coal-based needle coke, and 2 % by weight of the inhibitor were mixed and kneaded for 5 minutes while heating at 165 °C. The resulting kneaded product was molded into a disk of 20 mm $\Phi \times$ 3 mm to 15 mm, followed by precalcination at 1000 °C or 1300 °C for 3 hours using a calcination furnace to burn off the binder pitch to obtain a test piece for the puffing measurement. The test piece was heated up to 2100 °C or 2800 °C at a heating rate of 20 °C/min to perform a calcination (final calcination) of the test piece. The irreversible expansion ratio between before and after the calcination was calculated using the formula (I) or formula (II) described above, and the obtained value was expressed as a cold puffing value. The cold puffing value for the precalcination temperature of 1000 °C and the final calcination temperature (maximum temperature of final calcination) of 2100 °C is the puffing value $P_{2100}$, and the cold puffing value for the precalcination temperature of 1300 °C and the final calcination temperature (maximum temperature of final calcination) of 2800 °C is the puffing value $P_{2800}$.

[Example B1]

Ca and Si were mixed so as to provide the molar ratio shown in Table 6, and an inhibitor in which CaO and $SiO_2$ were combined was synthesized by the method of item (1) above. Using the obtained inhibitor, two test pieces were prepared by the method of item (7) above, and measurement was performed by the cold puffing method. In order to distinguish between nitrogen puffing and sulfur puffing, one test piece was calcined at 2100 °C, where nitrogen puffing is supposed to occur, and another test piece was calcined up to 2800 °C, to thereby obtain 2100 °C cold puffing value ($P_{2100}$) and 2800 °C cold puffing value ($P_{2800}$).

[Example B2]

CaO and $SiO_2$ were mixed at a ratio of 75 mol% of CaO and 25 mol% of $SiO_2$ to obtain a powder mixture. Then, two test pieces were prepared in the same manner as in Example B1 except that the obtained powder mixture was used as an inhibitor, and the 2100 °C cold puffing value ($P_{2100}$) and the 2800 °C cold puffing value ($P_{2800}$) were obtained.

[Comparative Example B1]

Two test pieces were prepared in the same manner as in Example B1 except that CaO alone was used as an inhibitor, and the 2100 °C cold puffing value ($P_{2100}$) and the 2800 °C cold puffing value ($P_{2800}$) were obtained.

[Comparative Example B2]

Two test pieces were prepared in the same manner as in Example B1 except that $SiO_2$ alone was used as an inhibitor, and the 2100 °C cold puffing value ($P_{2100}$) and the 2800 °C cold puffing value ($P_{2800}$) were obtained.

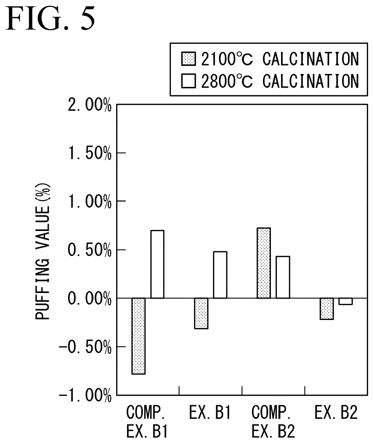

Table 6 and FIG. 5 show the cold puffing values measured at 2100 °C and 2800 °C in each example.

[Table 6]

| | Raw material molar ratio | | Morphology | 2100 °C cold puffing value | 2800 °C cold puffing value |
|---|---|---|---|---|---|
| | CaO/ CaOH | SiO2 | | | |
| Comparative Example B 1 | 100 | 0 | Composite | -0.78% | 0. 70% |
| Example B1 | 75 | 25 | Composite | -0.31% | 0.48% |
| Comparative Example B2 | 0 | 100 | Composite | 0.72% | 0.43% |
| Example B2 | 75 | 25 | Mixture | -0.23% | -0.06% |

As shown in Table 6 and FIG. 5, occurrences of puffing at both 2100 °C and 2800 °C were suppressed in Examples B1 and B2 with addition of the inhibitor of the second embodiment.

Further, as shown in Comparative Examples B1 and B2, when only a single element metal was added, not both occurrences of puffing at 2100 °C and 2800 °C could be suppressed. For example, only the effect of suppressing nitrogen puffing at 2100 °C was confirmed in Comparative Example B1.

That is, it is presumed that, since the inhibitor of the second embodiment contains the oxide including the element ($M\alpha$) and the oxide including the element ($M\beta$), the oxides react with nitrogen or sulfur in the coke during the heating process for the calcination to form composite compounds (i.e., nitrides, oxynitrides, sulfides, and oxysulfides), which produces the effects of the second embodiment.

(8) Puffing measurement method-3 (cold puffing method)

In each of the examples, a coal-based needle coke pulverized to a predetermined particle size, a binder pitch in an amount of 30 % by weight in terms of an outer percentage based on the amount of the coal-based needle coke, and 2 % by weight of the inhibitor were mixed and kneaded for 5 minutes while heating at 165 °C. The resulting kneaded product was molded into a disk of 20 mm $\Phi \times$ 3 mm to 15 mm, followed by precalcination at 1000 °C for 3 hours using a calcination furnace to burn off the binder pitch to obtain a test piece for the puffing measurement. The test piece was heated up to 2100 °C, 2650 °C or 2800 °C at a heating rate of 20 °C/min to perform a calcination (final calcination) of the test piece. The irreversible expansion ratio between before and after the calcination was calculated, and the obtained value was expressed as a cold puffing value. The cold puffing value for heating up to 2100 °C was calculated by the formula (I) described above, and the cold puffing value for heating up to 2650 °C or 2800 °C was calculated by substituting the thickness (mm) of the test piece after calcination up to 2650 °C or 2800 °C as L2 in the above formula (I).

(9) Measurement method for graphitized BD

With respect to the test piece after the calcination in the measurement method of item (8) above, the volume was calculated from the diameter and thickness of the test piece, and the weight of the test piece was measured. The weight was divided by the volume to calculate the bulk density as molded product BD (bulk density: BD).

(10) Composition analysis method

The composition analysis was performed on the test piece after the precalcination or the calcination in each example.
As for the metal elements (Ca, Si) in the test piece, quantitative determination was performed as follows. After dry ashing the test piece at a maximum temperature of 750 °C, the resulting ash was decomposed with molten alkali salt, and dissolved in dilute hydrochloric acid to a predetermined volume. The resulting was diluted as appropriate, and analyzed with an inductively coupled plasma (ICP) emission spectrometer (iCAP7600 duo manufactured by Thermo Fischer Scientific) to perform the quantitative determination by the matrix matching calibration curve method. Nitrogen and oxygen in the test piece were heat-extracted with an impulse furnace under an inert gas atmosphere using an oxygen-nitrogen analyzer (TCH600 manufactured by LECO), and oxygen was quantified by the NIR detection calibration curve method, while nitrogen was quantified by the thermal conductivity-detection calibration curve method. Sulfur in the test piece was quantified by the NIR detection calibration curve method using a carbon sulfur analyzer (CS600 manufactured by LECO), in which the test piece was burnt in a high-frequency furnace in an oxygen stream.

[Example C1]

Using $Ca_3SiO_5$ synthesized by the method of item (1) above as an inhibitor, a test piece was prepared by the method of item (8) above, and the composition analysis of the test piece after precalcination was performed by the method of item (10) above. The results are shown in Table 7.

[Examples C2 to C4]

Using $Ca_3SiO_5$ synthesized by the method of item (1) above as an inhibitor, a test piece was prepared by the method of item (8) above. The test piece after precalcination was calcined by heated up to 2100 °C, 2650 °C or 2800 °C to measure the cold puffing values. In addition, for the test piece, the mold product density BD was measured by the method of item (9) above, and the composition analysis was performed by the method of item (10) above. The results are shown in Table 7.
The unit for each component in the composition analysis results in Table 6 is $\mu$mol/g.

[Table 7]

|  | Sample | Ca | Si | O | N | S | Cold puffing value | Molded product density BD |
|---|---|---|---|---|---|---|---|---|
| Example C1 | $Ca_3SiO_5$ 2wt% 1000°C calcined product | 200 | 68.0 | 505 | 505 | 173 | - | - |
| Example C2 | $Ca_3SiO_5$ 2wt% 2100°C calcined product | 149 | 5.21 | 14.9 | 111 | 125 | -0.89% | 1.34 |
| Example C3 | $Ca_3SiO_5$ 2wt% 2650°C calcined product | 25.3 | <2 | 8.5 | <10 | 49.7 | 1.00% | 1.32 |
| Example C4 | $Ca_3SiO_5$ 2wt% 2800°C calcined product | 0.117 | <2 | 6.8 | <10 | <20 | 1.01% | 1.33 |

As shown in Table 7, in Examples C1 to C4 with addition of the inhibitor of the third embodiment, the puffing was suppressed. Moreover, in Example B4, the residual amount of inhibitor-derived substances after the graphitization treatment was extremely small. Although it depends on the use of the graphite electrode, if the amount of inhibitor-derived residual substances in the graphite electrode is small, it is advantageous in that the deterioration of the product performance of the graphite electrode and the adverse effect on the environment can be reduced.

## Claims

1. An inhibitor for graphite electrode production, comprising at least one of a metal consisting of an element ($M\beta$) and an oxide comprising the element ($M\beta$),
   wherein the element ($M\beta$) is at least one element selected from the group consisting of group 4 elements, group 8 elements, group 9 elements, group 10 elements, group 13 elements, group 14 elements and group 15 elements of the long-form periodic table.

2. The inhibitor according to claim 1, wherein the element ($M\beta$) is at least one element selected from the group consisting of Si, Ge, Al, B, Ti, Fe and P.

3. The inhibitor according to claim 1 or 2, wherein the oxide comprising the element ($M\beta$) is a composite oxide comprising an element ($M\alpha$) and the element ($M\beta$), ($M\beta$).
   wherein the element ($M\alpha$) is at least one metal element excluding the element

4. The inhibitor according to claim 3, wherein the element ($M\alpha$) is at least one metal element selected from the group consisting of K, Sc, alkaline earth metal elements and rare earth metal elements.

5. The inhibitor according to claim 3 or 4, wherein the composite oxide has a compositional represented by formula (1):

$$M\alpha_{3-x}M\beta_{1-y}O_{5-z} \qquad (1),$$

   wherein $0 \leqq x < 3$, $0 \leqq y < 1$, and $0 \leqq z < 5$.

6. The inhibitor according to claim 1 or 2, which further comprises at least one of a metal consisting of an element ($M\alpha$) and an oxide having the element ($M\alpha$),
   wherein the element ($M\alpha$) is at least one metal element excluding the element ($M\beta$).

7. The inhibitor according to claim 6, wherein the element ($M\alpha$) is at least one metal element selected from the group consisting of K, Sc, alkaline earth metal elements and rare earth metal elements.

8. The inhibitor according to claim 6 or 7, wherein the oxide containing the element ($M\alpha$) has a composition represented by formula (2):

$$M\alpha_{3-x1}O_{3-z1} \qquad (2),$$

   wherein $M\alpha$ is the element ($M\alpha$), $0 \leqq x1 < 3$, and $0 \leqq z1 < 3$.

9. The inhibitor according to any one of claims 6 to 8, wherein the oxide comprising the element ($M\beta$) has a composition represented by formula (3):

$$M\beta_{1-y1}O_{2-z2} \qquad (3),$$

   wherein $M\beta$ is the element ($M\beta$), $0 \leqq y1 < 1$, and $0 \leqq z2 < 2$.

10. An inhibitor for graphite electrode production, comprising at least one of a metal consisting of an element ($M\beta$) and a compound comprising the element ($M\beta$),

    wherein the inhibitor volatilizes at a temperature of 2100 to 6000 °C, and
    wherein the element ($M\beta$) is at least one element selected from the group consisting of group 4 elements, group 8 elements, group 9 elements, group 10 elements, group 13 elements, group 14 elements and group 15 elements of the long-form periodic table.

11. The inhibitor according to claim 10, which satisfies Y/X < 0.01, wherein X is a proportion (% by weight) of the inhibitor added to a needle coke, and Y is a proportion (% by weight) of the inhibitor after heat-treated at 2800 °C for 30 minutes.

12. The inhibitor according to claim 10 or 11, wherein the element ($M\beta$) is at least one element selected from the group consisting of Si, Ge, Al, B, Ti, Fe and P.

13. The inhibitor according to any one of claims 10 to 12, which reacts with a sulfur compound.

14. The inhibitor according to any one of claims 10 to 13, which reacts with a nitrogen compound.

15. The inhibitor according to any one of claims 10 to 14, wherein the oxide comprising the element ($M\beta$) further comprises an element ($M\alpha$-1),
wherein the element ($M\alpha$-1) is at least one metal element including at least an alkaline earth metal element, excluding the element ($M\beta$).

16. The inhibitor according to any one of claims 10 to 15, which further comprises at least one of a metal consisting of an element ($M\alpha$-1) or a compound comprising the element ($M\alpha$-1),
wherein the element ($M\alpha$-1) is at least one metal element including at least an alkaline earth metal element, excluding the element ($M\beta$).

17. The inhibitor according to any one of claims 10 to 16, wherein the element ($M\alpha$-1) is at least one metal element selected from the group consisting of K, Sc, alkaline earth metal elements and rare earth metal elements.

18. The inhibitor according to any one of claims 1 to 17, which has a puffing value $P_{2100}$ of 1.00 % or less, which is calculated by formula (I) with respect to a test piece prepared in an evaluation test (i):

$$P_{2100} = (L2 - L1)/L1 \times 100 \qquad (I),$$

wherein:

   L1 is a thickness (mm) of the test piece before calcination, and
   L2 is a thickness (mm) of the test piece after calcination up to 2100 °C; and

wherein the evaluation test (i) comprises:
mixing a coal-based needle coke, a binder pitch in an amount of 30 % by weight in terms of an outer percentage based on an amount of the coal-based needle coke, and the inhibitor, followed by kneading for 5 minutes while heating at 165 °C to obtain a kneaded product, molding the kneaded product into a disk of 20 mmΦ × 3 mm to 15 mm, followed by precalcination at 1000 °C for 3 hours using a calcination furnace to burn off the binder pitch to obtain a test piece, and heating the test piece to 2100 °C at a heating rate of 20 °C/min to perform a calcination of the test piece, wherein the L1 and the L2 of the test piece are respectively measured before and after the calcination of the test piece.

19. A composition comprising the inhibitor of any one of claims 1 to 18, and a needle coke.

20. A needle coke for a graphite electrode, comprising the composition of claim 19.

21. A graphite electrode obtained by calcining the needle coke according to claim 20.

22. A method for producing a needle coke for a graphite electrode, wherein the needle coke comprises a composition in which an inhibitor is directly attached to the surface of the needle coke,
the method comprising adding a solution or molten form of the inhibitor of any one of claims 1 to 18 to a needle coke before kneaded with a binder pitch, and attaching the inhibitor directly to the surface of the needle coke.

23. A method for producing a graphite electrode, comprising calcining the needle coke of claim 20.

24. The method according to claim 23, wherein the needle coke is calcined at a temperature of 300 to 1500 °C.

FIG. 1

FIG. 2

## FIG. 3

## FIG. 4

FIG. 5

# EP 4 321 482 A1

| INTERNATIONAL SEARCH REPORT | International application No. |
|---|---|
| | **PCT/JP2022/017351** |

**A. CLASSIFICATION OF SUBJECT MATTER**

*C01B 33/20*(2006.01)i; *C01B 33/22*(2006.01)i; *C01B 33/24*(2006.01)i; *C10B 57/04*(2006.01)i; *C10B 57/06*(2006.01)i; *C04B 35/52*(2006.01)i; *C04B 35/524*(2006.01)i; *C04B 35/528*(2006.01)i; *C01B 32/05*(2017.01)i; *C01B 32/205*(2017.01)i
FI: C01B33/20; C01B32/05; C01B32/205; C01B33/22; C01B33/24; C01B33/24 101; C04B35/52; C04B35/524; C04B35/528; C10B57/04 101; C10B57/06

According to International Patent Classification (IPC) or to both national classification and IPC

**B. FIELDS SEARCHED**

Minimum documentation searched (classification system followed by classification symbols)

C01B33/20; C01B33/22; C01B33/24; C10B57/04; C10B57/06; C04B35/52; C04B35/524; C04B35/528; C01B32/05; C01B32/205

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2001-329271 A (NIPPON STEEL CHEM. CO., LTD.) 27 November 2001 (2001-11-27) claims, paragraphs [0002], [0007], [0015], [0016], [0023], [0026], [0040] | 1-2, 10-14, 19-24 |
| Y | | 22 |
| A | | 3-9, 15-18 |
| X | JP 2001-11471 A (NIPPON STEEL CHEM. CO., LTD.) 16 January 2001 (2001-01-16) claims, paragraphs [0002], [0007], [0012], [0019], [0021], [0035] | 1-2, 10-14, 19-24 |
| Y | | 22 |
| A | | 3-9, 15-18 |
| X | JP 62-59511 A (NIPPON STEEL CORP.) 16 March 1987 (1987-03-16) claims, page 1, right column, lines 1-6, page 2, left column, lines 11-20, examples | 1-2, 6-8, 10-14, 16-21, 23-34 |
| Y | examples | 8, 22 |
| A | | 3-5, 9, 15 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **03 June 2022** | **14 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

25

**INTERNATIONAL SEARCH REPORT**

| International application No. |
| --- |
| **PCT/JP2022/017351** |

**C.     DOCUMENTS CONSIDERED TO BE RELEVANT**

| Category* | Citation of document, with indication, where appropriate, of the relevant passages | Relevant to claim No. |
| --- | --- | --- |
| X | WO 95/27766 A1 (NIPPON STEEL CHEM. CO., LTD.) 19 October 1995 (1995-10-19) claims, page 4, lines 7-9, page 6, line 26 to page 7, line 5, page 12, lines 3-10, page 15, tables 1, 2, examples 3, 8, comparative examples 1, 7 | 1-14, 18-24 |
| Y | | 6-9 |
| A | | 15-17 |
| X | JP 49-47637 B1 (GREAT LAKES CARBON CORP.) 17 December 1974 (1974-12-17) claims, page 181, left column, lines 27-37, page 181, right column, line 37 to page 182, left column, line 5, page 182, right column, liens 5-12, examples 5-7, 9 | 1-2, 6-7, 9-14, 16-21, 23-34 |
| Y | | 8, 22 |
| A | | 3-5, 15 |
| Y | JP 54-146205 A (ASEA AB) 15 November 1979 (1979-11-15) page 18, lower left column, line 18 to lower right column, line 1 | 6-9 |

Form PCT/ISA/210 (second sheet) (January 2015)

## INTERNATIONAL SEARCH REPORT
### Information on patent family members

International application No.

**PCT/JP2022/017351**

| Patent document cited in search report | | | Publication date (day/month/year) | Patent family member(s) | Publication date (day/month/year) |
|---|---|---|---|---|---|
| JP | 2001-329271 | A | 27 November 2001 | (Family: none) | |
| JP | 2001-11471 | A | 16 January 2001 | WO 2000/066513 A1 claims, paragraphs [0002], [0007], [0012], [0019], [0021], [0035] | |
| JP | 62-59511 | A | 16 March 1987 | (Family: none) | |
| WO | 95/27766 | A1 | 19 October 1995 | US 5900189 A claims, column 1, lines 12-16, column 3, lines 18-45, column 8, lines 3-14, column 9, lines 42-52, tables 1, 2, examples 3, 8, comparative examples 1, 7 EP 754746 A1 CN 1145089 A | |
| JP | 49-47637 | B1 | 17 December 1974 | US 3563705 A claims, column 1, lines 25-37, column 2, lines 10-17, column 2, lines 49-57, examples 5-7, 9 | |
| JP | 54-146205 | A | 15 November 1979 | GB 2024256 A page 2, lines 117-120 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021066201 A
- JP 2021066203 A
- JP 2021066639 A
- JP SHO6033208 A
- JP SHO60208392 A
- JP SHO63135486 A
- JP 2001329271 A